(19) Europäisches Patentamt
European Patent Office
Office européen des brevets

(11) Publication number: 0 255 790 B1

# (12) EUROPEAN PATENT SPECIFICATION

(45) Date of publication of the patent specification: **03.10.90**

(51) Int. Cl.5: **C08F 4/60**, C08F 10/00

(21) Application number: **87401712.2**

(22) Date of filing: **23.07.87**

## (54) Process for the polymerization of alpha-olefins or of their mixtures with minor amounts of ethylene, by means of catalysts comprising solid components or precursors of such components, in the form of microspheroidal particles.

(30) Priority: **31.07.86 IT 2133486**
**27.11.86 IT 2246886**

(43) Date of publication of application: **10.02.88 Bulletin 88/6**

(45) Publication of the grant of the patent: **03.10.90 Bulletin 90/40**

(84) Designated Contracting States: **BE DE FR GB NL**

(56) References cited:
**EP-A- 0 083 074**
**FR-A- 2 434 180**
**US-A- 3 953 414**

(73) Proprietor: **Montedison S.p.A., 31, Foro Buonaparte, I-20121 Milan(IT)**

(72) Inventor: **Albizzati, Enrico, 64, via Roma, I-28041 Arona Novara(IT)**

(74) Representative: **Hirsch, Marc-Roger, Cabinet Hirsch 34 rue de Bassano, F-75008 Paris(FR)**

EP 0 255 790 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

BACKGROUND OF THE INVENTION

The present invention relates to a process for the catalytic polymerization of alpha-olefins of formula:
R–CH=$CH_2$
wherein:
R = $C_1$ to $C_6$ alkyl, or of their mixtures with minor amounts of ethylene. It also concerns the polymers obtained by the said process.

Several processes for the preparation of homopolymers or copolymers of alpha-olefins with the use of solid catalytic components, are known from the prior art; said solid catalytic components comprise, as their essential constituants, halogenated compounds of magnesium, titanium, and an electro-donor compound.

The polymers obtained by means of such catalysts are generally in form of a powder presenting a more or less wide distribution of particle dimensions.

The use of such catalysts is, however, limited from the view point of the separation and of the carriage of the polymers, of the conditions of suspension polymerization, of the conditions of stabilization, or of the conditions of recovery of the polymer in the gas-phase polymerization processes.

There is thus a need to render available catalysts presenting a high activity, which allow polymers to be obtained in the form of particles having a narrow granulometric distribution, and furthermore presenting a high bulk density.

Various methods have been proposed in the prior art for preparing such catalysts, one of which is disclosed in Italian patent 969 340, filed in the name of the present Applicant, and consists in reacting a compound of Ti with a support consisting of, or comprising, an anhydrous Mg halide, in the form of spherical particles having an average diameter of 1–300 µm, high surface area and porosity and optionally with an electron-donor compound. A solid catalytic component is thus obtained which, when used with Al-organometallic compounds produces polymers in the form of particles having a narrow granulometric distribution and presenting a high free-flowing properties. The technology to be used in that case is however rather complex.

Another method is disclosed in European patent application n° 83 074 filed in the name of the present Applicant, and consists in preparing an emulsion, in a silicon oil or in a hydrocarbon, of an immiscible liquid comprising a complex of $MgCl_2$ with $AlCl_3$ and with toluene and in reacting such an emulsion with Al-trialkyl, to precipitate a solid catalytic component. The catalysts obtained from such catalytic components allow the obtention of polymers in the form of particles presenting a narrow granulometric distribution, the bulk density of which is however still not satisfactory.

THE PRESENT INVENTION

Applicant has now found a process for the catalytic polymerization of alpha-olefins of formula:
R–CH=$CH_2$
wherein:
R = $C_1$ to $C_6$ alkyl, or of their mixtures with minor amounts of ethylene, which is carried out in the presence of catalysts comprising:

(A) a solid compound, obtained by reacting

(a) an emulsion in a perfluoropolyether of compounds of magnesium, and/or of a transition metal liquid under the emulsifying conditions, or of solutions of compounds of magnesium and/or of compounds of a transition metal in solvents not miscible with the perfluoropolyether, optionally in the presence of electron-donors,

with

(b) a reducing and/or halogenating agent able to precipitate such compounds in the form of a solid product, the molecule of which contains at least one Mg-halogen bond and/or one transition metal-halogen bond in case where compounds of Mg and/or of a transition metal are present in the emulsion;

(B) an aluminum-alkyl compound;

(C) an electron-donor compound.

Polymers or copolymers in the form of particles endowed with a narrow granulometric distribution and with a high bulk density are obtained with the process according to the invention.

The Mg compounds to be suitably used in the perfluoropolyether emulsion according to the process of the invention, are any magnesium compounds which are liquid at the emulsifying conditions or which are soluble in a solvent not miscible with the perfluoropolyether, and which, by reacting with precipitating agent (b), are able to produce compounds the molecule of which contains at least one Mg-halogen bond.

The titanium compounds, or compounds of other transition metals to be used according to the invention are tetrahalides, alkoxides or halo-alkoxides of tetravalent titanium; $VOCl_3$ and vanadium acetylacetonates are preferably used.

To that class of Mg compounds belong among others those compounds which have the general formula:

(I) $Mg(OR_1)_{2-n}X_n$ wherein:

$R_1$ = optionally halogenated $C_1$–$C_{12}$ hydrocarbon radical;

X is a halogen, preferably chlorine;

n = an integer comprised within the range of from 0 to 2, with the extremes being included.

Examples of representative compounds of such formula are: $MgCl_2$, $MgBr_2$, $MgI_2$, $Mg(OC_2H_5)Cl$, $Mg(OC_6H_5)Cl$, $Mg(OC_8H_{17})Cl$, $Mg(OCH_2C_6H_5)Cl$, $Mg(OC_3H_6Cl)Cl$, $Mg(OC_3H_5Cl_2)Cl$, Mg(O-cyclohexyl)Cl, and the mixtures of such compounds; or

(II) $Mg(OR_1)_{m-n}(R_2)_n$ wherein:

$R_1$ has the above meanings;

$R_2$ can be a $C_1$–$C_{12}$ hydrocarbon radical, equal to, or different, from $R_1$;

m and n are integers comprised within the range of from 0 to 2, with the extremes being included;

or

(III) $MgX_2 \cdot nTi(OR_1)_4$ wherein:

X = halogen, preferably chlorine;

$R_1$ has the meanings given in formula (I);

n = integer greater than or equal to 2, but preferably not higher than 3.

(IV) Complexes of $MgX_2$ (wherein X has the above meanings) with electron-donor compounds.

As already mentioned herein-above, the compounds of magnesium, titanium and other transition metals can be used in the form of solution in one or more solvents, for the preparation of their emulsion in perfluoropolyether. Such solvents should not be miscible with the used perfluoropolyether. Preferred solvents, in the case of magnesium compounds, are titanium compounds in the liquid form in particular the Ti-alkoxides or Ti-halo-alkoxides of general formula:

(V) Ti $(OR_1)_{4-n}X_n$ wherein:

$R_1$ has the meanings given in above formula (I), and is, in particular, an alkyl, aryl, aralkyl, cycloalkyl radical, optionally containing up to 3 substituent halogen atoms;

X is a halogen, preferably chlorine;

n is an integer comprised within the range of from 0 to 3, with the extremes being included.

Examples of such Ti compounds are $Ti(O\text{-}iC_3H_7)_4$, $Ti(O\text{-}nC_4H_9)_4$, $Ti(O\text{-}iC_4H_9)_4$, $Ti(O\text{-}iC_8H_{17})_4$, $Ti(O\text{-}CH_2C_6H_5)_4$, $Ti(O\text{-}C_3H_6Cl)_4$, $Ti(O\text{-}C_3H_5Cl_2)_4$, $Ti(O\text{-}C_4H_9)_3Cl$, $Ti(O\text{-}C_4H_9)_2Cl_2$.

Polymers of the compounds of general formula (V), with a polymerization degree of from 2 to 20, and mixtures of the above-said solvents with organic solvents, e.g., hydrocarbon solvents, can also be used.

When the liquid Mg compound can react with the precipitating agent, so that it precipitates from the emulsion in the form of a solid compound the molecule of which contains at least one Mg-halogen bond, the presence of liquid Ti compounds in the emulsion is optional. When the Mg compound is not able to react with the precipitating agent, it is suitable to use in the emulsion a liquid Ti compound, able to bind itself to the Mg compound, and to react, in its turn, with the precipitating agent, yielding a solid product the molecule of which contains at least one Mg-halogen and Ti-halogen bond. In this second case, the Ti compound can act as the same solvent for the Mg compound. For example, in the case where the Mg compound used is a dihalide, satisfactory results are obtained by using in the emulsion a Ti-alkoxide, which forms a liquid complex with the Mg halide, capable of reacting with the precipitating agent. Such a Ti-alkoxide can be one comprised in the above disclosed general formula (V). When operating in the absence of Ti compounds, or of compounds of other transition metals, in the emulsion, the solid product obtained after the reaction with the halogenating and/or reducing agent, which contains at least one Mg-halogen bond, is subsequently treated with a tetravalent-Ti halide or with a halide of another transition metal.

The perfluoropolyethers herein used for preparing the emulsions are well-known products, wherein the perfluoropolyether structure is generally formed of recurring $-C_2F_4O-$ and/or $-C_3F_6O-$ units, optionally also comprising $-CF_2O-$ units.

Suitable perfluoropolyethers are in particular those which comply with the following formulae, and have a viscosity comprised between 4 and 1500 cSt:

A) $CF_3O\text{-}(C_3F_6O)_m(C_2F_4O)_n(CFXO)_q\text{-}CF_3$

wherein X is -F or $-CF_3$; m, n and q are integers; the m/n + q ratio is comprised between 1 and 50 and n/q is comprised between 1 and 10; the oxyperfluoroalkylene units are randomly distributed along the chain.

The preparation of these compounds is disclosed in U.S. patent 3,665,041.

B) $C_3F_7O(C_3F_6O)_m\text{-}R_f$

wherein $R_f$ is $C_2F_5$ or $C_3F_7$ and m is an integer greater than 2.

The preparation of these compounds is disclosed in U.S. patent 3,242,218.

C) $CF_3O(C_2F_4O)_p(CF_2O)_q\text{-}CF_3$

wherein p and q are integers equal to, or different from each other, and the p/q ratio is comprised between 0.5 and 1.5; the oxyperfluoroalkylene units are randomly distributed along the chains.
The preparation of these compounds is disclosed in U.S. patents 3,715,378 and 3,665,041.

D) $CF_3O(C_3F_6O)_m(CFXO)_n-CF_2Y$

wherein X and Y, equal to or different from each other, are -F or $-CF_3$; m and n are integers and the m/n ratio is comprised between 5 and 40. The oxyperfluoroalkylene units are randomly distributed along the chain.
The preparation of these compounds is disclosed in U.K. patents 1,104,481 and 1,226,566.

E) $R'_fO(CF_3CF_2O)_pR_f$

wherein $R_f$ and $R'_f$, equal to or different from each other, are $-CF_3$ or $-C_2F_5$ and p is an integer such that the viscosity is within the previously indicated limits.
Products of this type are disclosed in U.S. patent 4,523,039.

F) $R'_fO(CF_2CF_2CF_2O)_sR_f$

wherein $R_f$ and $R'_f$, equal to or different from each other, are $-CF_3$ or $-C_2F_5$ and s is an integer such that the viscosity is within the previously indicated limits.
Products of this type are disclosed in European patent application 148 482.

Usually, the perfluoropolyether used for forming the emulsion has a viscosity comprised between 4 and 200 $mm^2/s$ (cSt).

Although the process is normally carried out with the emulsion being at room temperature, operating at a lower or higher than ambient temperature, e.g. at a temperature of from -30° to +90°C, is however possible.

The ratio, by volume of the magnesium compound to the perfluoropolyether in the emulsion is comprised within the range of from 0.01 to 1.

The emulsion is preferably prepared in the presence of an emulsion stabilizer constituted by a perfluoropolyether having a functionalized terminal.

The perfluoropolyether having a functionalized terminal preferably has the following terminals:

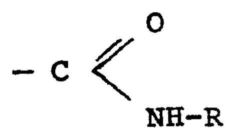

or

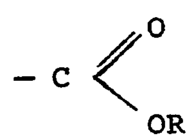

wherein:
R is a linear, branched or cyclic $C_1$ to $C_{20}$ alkyl, or a $C_7$ to $C_{20}$ alkylaryl; R may also contain heteroatoms, in particular O and/or Si atoms, and substituents, e.g. Cl.

Examples of suitable emulsion stabilizers are:

$$CF_3-(OC_3F_6)_n(OCF_2)_m-O-CF_2-COO-CH_2-\underset{CH_3}{CH}-CH_3 \quad (I)$$

$$CF_3-(OC_3F_6)_n(OCF_2)_m-OCF_2-COO-CH_2-CHOH-O-(CH_2)_3-Si(OMe)_3 \quad (II)$$

$$CF_3-(OC_3F_6)_n(OCF_2)_m-O-CF_2CO-NH-(CH_2)_3-Si(OEt)_3 \quad (III)$$

$CF_3-(OC_3F_6)_n(OCF_2)_m-OCF_2-COO-CH_2-CHOH-O-(CH_2)_3-Si(OMe)_3$ (II)
$CF_3-(OC_3F_6)_n(OCF_2)_m-O-CF_2CO-NH-(CH_2)_3-Si(OEt)_3$ (III)

The amount of emulsion stabilizer is generally comprised between 0.01% and 5% by weight relative to the perfluoropolyether; however any amounts allowing the emulsion to be obtained can be advantageously used in the process of the invention.

The emulsion can be prepared, for instance, by a strong stirring, e.g., by using an Ultraturrax stirrer.

The Mg compound can be used in the emulsion in the form of a complex with electron-donor compounds; however, electron-donor compounds can be added to the emulsion of Mg compound, before the treatment thereof with the precipitating agent (b), to obtain suitable catalytic components for the preparation of catalysts to be used in the stereoregular polymerization of alpha-olefins. The preparation technique for such catalysts is well-known in the technical literature. Particularly suitable electron-donors contain in their molecule oxygen atoms, or sulphur, phosphorus or nitrogen atoms.

In particular, the following can be mentioned: esters of oxygen-containing acids, acid halides, ketones, aldehydes, alcohols, ethers, thioethers, amides, lactons, phosphines, phosphoroamides, silicon compounds, such as silanic and siloxanic compounds.

Among esters, for exemplifying purposes can be cited the following can be mentioned: the alkyl esters of aromatic, aliphatic or aromatic mono- or polycarboxy acids generally containing from 2 to 20 C atoms, in particular the mono- and polyesters of the saturated and unsaturated polycarboxy acids, the esters of the aromatic hydroxyacids, and in general those disclosed, as electron-donors, in published European patent applications n° 45976, 45977, filed in the name of the present Applicant. Examples of such esters are methyl-, ethyl-, butyl- or octyl-acetate, ethyl- or ethylphenyl-butyrate, ethyl-valerianate, phenyl-propionate, mono- and di-ethyl- succinate, ethyl-methyl, ethyl-, propyl- or octyl-benzoate, ethyl-p-toluate, ethyl-p-anisate, diethyl-diisobutyl-malonate, diethyl-n-butyl-malonate, diethyl-n-dibutylmalonate, diethyl-phenyl-malonate, diisobutyl-adipate, dioctyl-sebacate, the alkylmaleates, the alkyl-aryl-maleates, the alkyl- or aryl-alkyl-pivalates, the alkyl-acrylates and metacrylates, the phthalates, such as the isobutyl-, and diisobutyl- or dioctyl- or neopentyl-phthalate, diethyl-phthalate, diphenylphthalate, benzyl-butyl-phthalate; diphenylcarbonate, ethyldiphenyl-acetate, isobutyl-benzoylacetate, 1,2-dihydroxy-diacetatobenzene, diisobutyl-2,3-naphthalene-dicarboxylate.

Among ethers, for exemplifying purposes the following can be mentioned: the $C_2$ to $C_{20}$ mono-, di-, tri or tetra- ethers, such as diethylether, dibutylether, diisoamylether, dioctylether, dioxan, trioxan, tetrahydrofuran, ethylene-glycol-dimethylether, propylene oxide, epichlorohydrin, benzo-phenone.

Examples of other electron-donors which can be used are phosphites, such as triphenylphosphite, triphenylphosphine, 1,4-butanediol; $POCl_3$, acetyl alpha-methyl-alpha-phenyl chloride, benzoyl chloride, bromide and iodide, toluyl chloride, butyrolacton, and in general all of those indicated in European patent applications n° 86741, 86472 and 86743 filed in the name of the present Applicant. Furthermore, the silicon compounds and the heterocyclic compounds containing at least one nitrogen atom are indicated.

The precipitating agents (b) to be used for the treatment of the emulsion, can be any halogenated compounds capable of reacting with the compound of magnesium or of the transition metal contained in the emulsion to yield a solid compound the molecule of which contains at least one Mg-halogen bond, and/or at least one transition metal-halogen bond. In the case of emulsions containing Mg compounds, the most appropriate compounds are generally halogenating agents capable of forming, in the reaction with Mg, Mg halides, or organometallic compounds, in particular aluminum-trialkyls, able to decompose the liquid Mg complex, with the formation of Mg halide. In the case of transition metals, the precipitating agent is generally an organometal reducing agent.

Examples of halogenating compounds are the silicon compounds having the general formula:

$SiR_xX_{4-x}$

wherein:

R = $C_1$ to $C_{20}$ alkyl, aryl, aralkyl or alkoxy radical;

X = halogen, preferably chlorine; and

$0 \leq x \leq 3$;

or the titanium compounds of general formula:

$Ti(OR)_xX_{4-x}$

wherein R, X and x have the above meanings;

or the aluminum compounds, of formula:

$AlR_xX_{3-x}$

wherein R and X have the above meanings; and $0 \leq x \leq 2$.

For exemplifying purposes, among these compounds $SiCl_4$, $TiCl_4$, $AlEt_2Cl$ can be cited.

The treatment of the emulsion with the precipitating (or halogenating) agent is carried out by using an amount of such an agent at least equal to the stoichiometrical amount necessary to obtain at least one Mg-halogen bond in the molecule of the magnesium compound present in the emulsion, and/or to obtain at least the reduction by one unit of the valence of the transition metal, when a transition metal compound is present.

The treatment temperature is not critical; for exemplifying purposes, operating is possible at temperatures comprised between 20°C and the boiling temperature of the precipitating agent. The treatment can be accomplished by adding the halogenating agent as such, or diluted in a hydrocarbon solvent, to the emulsion, or vice-versa.

After the reaction, the solid product is separated washed and then, if is was obtained in the form of a precursor (i.e., if it was obtained from the emulsion without Ti compounds, or without any compounds of other transition metals, by using a precipitating agent different from a transition metal compound), it is treated with a tetravalent-Ti halide, or with a halide of a transition metal different from Ti, to obtain the catalytic component. If desired, operating in the presence of an electron donor is possible.

The treatment can also be carried out in the presence of a hydrocarbon, aromatic or halogenated solvent. The size of the catalytic component of the precursor is controlled by the stirring speed, by the viscosity of the polyperfluoroether liquid or of the liquid, or solution of, compound of Mg and/or of the transition metal. In particular, the size decreases with increased stirring speed.

The Al-alkyl compounds to be used as the component (B) of the catalyst in the process of the invention can be: Al-trialkyls, such as, e.g., $AlEt_3$, Al $(i\text{-}Bu)_3$, Al $(i\text{-}C_3H_7)_3$, $AlEt_2H$, and compounds containing two or more Al atoms bonded to each other through heteroatoms, such as:

$$(C_2H_5)_2Al-O-Al(C_2H_5)_2,$$

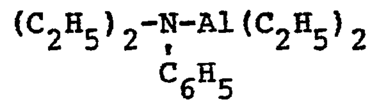

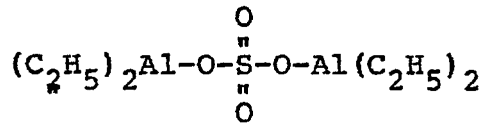

Al-alkyl compounds wherein Al atoms are bonded by means of groups such as $SO_4$ or $SO_3$ are also suitable.

Al-alkyl compounds can be used under the form of mixtures with Al-alkyl halides, such as $AlEt_2Cl$.

The components (C) of the catalyst, can be any electron-donor compounds, which can be present in the perfluoropolyether emulsion, and such as mentioned above.

The catalysts of the invention are used for polymerizing the alpha-olefins by known methods, i.e., by carrying out the polymerization in the liquid phase, optionally in the presence of an inert hydrocarbon solvent, in the gas phase, or also by combining, e.g. a phase of polymerization in liquid phase, with a phase in gas phase.

The temperature is generally comprised between 40° and 160°C, but preferably between 60° and 90°C, while operating under atmospheric or higher than atmospheric pressure.

The molecular weight regulator to be used can be either hydrogen or another molecular weight regulator of known type.

The following examples are given by way of non-limitative illustration of the present invention.

EXAMPLE 1

In a 1000 ml autoclave equipped with a magnetic-anchor stirrer and a dip tube connected, through a valve, to a 4000 mm long steel pipe of 2.4 mm of inner diameter, are charged 300 ml of perfluoropolyether (denominated Epilden DI/LS by Montefluos S.p.A.), having a viscosity of 4 $mm^2s$ (cSt), 40 ml of a liquid having the composition $MgCl_2.2Ti\ (OC_4H_9)_4$ (equivalent to 60 mM of Mg), and 6 ml of anhydrous n-heptane and 10 mM of methyl-p-toluate (MPT). The mass is maintained under stirring at 400 rpm, and 10 minutes later an overpressure of 50 atm of $N_2$ is created. During a 60 second time, the emulsion contained in the autoclave is discharged, through the above described pipe, into a 1000 ml flask, containing 400 ml of $TiCl_4$, maintained under stirring. The whole operation is carried out at 20°C. The reaction mass is maintained under stirring in the flask for 10 minutes, and the suspension is then transferred through a fritted filter into a reactor, wherein it is allowed to react at 100°C for 2 hours. $TiCl_4$ is filtered off, and an equal amount thereof is added; the mixture is left to react at 120°C for 2 hours. The suspension is then filtered and the filter panel is washed with portions of 300 l of n-heptane at 90°C, until no further chlorine ions are present in the filtrate.

Upon analysis, the obtained solid shows the following composition:
Mg = 16.1% by weight, Ti = 2.95%,
Cl = 5.58%, MPT = 9.0%

The propylene polymerization test carried out by using 30 mg of the so obtained solid as catalytic component gave the following results.

. polymer ................. 240 g
. yield ................... 8.0 kg of PP/ catalyst g.
. insolubles on extraction by n-heptane (I.I. ) .... 93%
. [η] ..................... 1.60 dl/g
. flowability index (flow). 20 seconds
. compacted apparent density (C.A.D.) ................ 0,43 g/$cm^3$ (g/cc)

COMPARATIVE EXAMPLE 1

Example 1 is repeated without any use of perfluoropolyether and the emulsifying step being omitted.

Upon analysis, the obtained solid shows the following composition:
Mg = 16.3%, Ti = 3.1%, Cl = 56.1%, MPT = 9.3%

The propylene polymerization test carried out by using as catalytic component 28 mg of the solid thus obtained, gave the following results:

. polymer ................. 230 g
. yield ................... 8.2 kg of PP/ catalyst g.
. I.I. .................... 92.5%
. [η] ..................... 1.80 dl/g
. flow .................... 26 seconds
. compacted apparent density ................. 0.31 g/cm³(g/cc)

The polymerization conditions prevailing in the above examples are the following.

Five mmol of Al-triisobutyl were reacted at room temperature with 1.25 mmol of methyl p-toluate in 100 ml of n-heptane for 5 minutes; they were then contacted with a corresponding amount of the catalytic component prepared according to the examples.

Separately, 900 ml of n-heptane was introduced, under a nitrogen atmosphere, into a 3000 ml capacity stainless-steel autoclave equipped with a magnetic-anchor stirrer and thermometer, and heated at the controlled temperature of 40°C, through said autoclave flows a stream of propylene.

In the same way, the suspension of the catalytic component was then introduced. After sealing the autoclave, hydrogen was added up to a partial pressure of 0.2 bar (atm); the temperature was then increased to 70°C, with at the same time propylene being fed until the obtention of a total pressure of 7 atmospheres. Such a pressure was kept constant throughout the polymerization time by being continuously feeding the monomer.

After four hours of reaction, the polymerization was discontinued and the polypropylene was isolated by treatment with methanol and acetone, and was then dried.

## Claims

1.- Process for the polymerization of alpha-olefins of formula:
$R\text{-}CH{=}CH_2$
wherein:
$R = C_1$ to $C_6$ alkyl,
or of their mixtures with minor amounts of ethylene, carried out in the presence of catalysts comprising:
(A) a solid compound, obtained by reacting
(a) an emulsion in a perfluoropolyether of compounds of magnesium, and/or of a transition metal liquid under the emulsifying conditions, or of solutions of compounds of magnesium and/or of compounds of a transition metal in solvents not miscible with the perfluoropolyether, optionally in the presence of electron-donors,
with
(b) an agent able to provoke precipitation of such a compound under the form of a solid the molecule of which contains at least one Mg-halogen and/or one transition metal-halogen bond in case where in the emulsion compounds of a transition metal are present;
(B) an aluminum-alkyl compound;
(C) an electron-donor compound.

2.- Process according to claim 1, wherein the magnesium compound is in the form of a solution in a titanium compound under liquid form.

3.- Process according to claim 1, wherein the Mg compound presents the general formula:
(I) $Mg(OR_1)_{2-n}X_n$
wherein:
$R_1 = C_1$ to $C_{12}$ optionally halogenated hydrocarbon radical;
X = halogen;
n = an integer comprised between 0 and 2.

4.- Process according to claim 1, wherein Mg compound presents the general formula:
(II) $Mg(OR_1)_{m-n}(R_2)_n$
wherein:
$R_1 = C_1$ to $C1_2$ optionally halogenated hydrocarbon radical;
$R_2 = C_1$ to $C_{12}$ hydrocarbon radical identical to, or different from $R_1$;
m and n = integers comprised between 0 and 2.

5. Process according to claim 1, characterized in that the Mg compound presents the general formula:
(III) $MgX_2 \cdot nTi(OR_1)_4$
wherein:
X = halogen;
$R = C_1$ to $C_{12}$ optionally halogenated hydrocarbon radical;
n = integer greater than or equal to 2.

6. Process according to claim 1, characterized in that the solvent of the magnesium compound is constituted by a liquid titanium compound of the general formula:
(IV) $Ti(OR_1)_{4-n}X_n$
wherein:
$R_1 = C_1$ to $C_{12}$ optionally halogenated hydrocarbon radical;

X = halogen;
n = integer comprised between 0 and 3.
7. Process according to claim 5, characterized in that the Mg compound is a Mg halide.

## Patentansprüche

1. Verfahren zur katalytischen Polymerisation von Alpha-Olefinen der Formel:
$R-CH=CH_2$ in der:
R ein $C_1-C_6$ Alkylradikal ist oder deren Mischung mit kleinen Ethylenmengen, dadurch gekennzeichnet, dass es angewandt wird in Anwesenheit von Katalysatoren, bestehend aus:
(A) einer festen Verbindung, die durch folgende Reaktion erhalten wird:
(a) einer in einem Perfluorpolyether enthaltenen Emulsion von Magnesium- und/oder einer flüssigen Transitionsmetallverbindung in emulgierendem Zustand, oder Magnesium- und/oder Transitionsmetallverbindungslösungen in Lösungsmitteln die in dem Perfluorpolyether unmischbar sind, eventuell in Anwesenheit von Elektrondonatoren mit
(b) einem Reduktions- und/oder Halogenisierungsmittel, das solche Verbindung in Form eines Festkörpers niederzuschlagen geeignet ist, deren Molekülen wenigstens eine Mg-Halogen und/oder eine Transitionsmetall-Halogen-Bindung enthält, wenn Mg-Verbindungen und/oder Transitionsmetallverbindungen in der Emulsion vorhanden sind;
(B) eine Aluminium-Alkyl-Verbindung;
(C) eine Elektrondonator-Verbindung.
2. Verfahren nach Anspruch 1, dadurch gekennzeichnet, dass die Magnesiumverbindung in Form einer Lösung in einer flüssigen Titanverbindung ist.
3. Verfahren nach Anspruch 1, dadurch gekennzeichnet, dass die Mg-Verbindung der allgemeinen Formel (I)
$Mg(OR_1)_{2-n}X_n$ entspricht, wobei:
$R_1$ ein $C_1-C_{12}$ Kohlenwasserstoffradikal, eventuell durch Halogen substituiert, ist;
X ein Halogen ist;
n eine ganze Zahl von 0 bis 2.
4. Verfahren nach Anspruch 1, in dem die Mg-Verbindung der allgemeinen Formel (II)
$Mg(OR_1)_{m-n}(R_2)_n$ entspricht wobei:
$R_1$ ein $C_1-C_{12}$ Kohlenwasserstoffradikal, eventuell durch Halogen substituiert, ist;
$R_2$ ein $C_1-C_{12}$ Kohlenwasserstoffradikal, identisch mit oder verschieden von $R_1$ ist, m und n ganze Zahlen von 0 bis 2 sind.
5. Verfahren nach Anspruch 1, dadurch gekennzeichnet, dass die Mg-Verbindung der allgemeinen Formel (III) $MgX_2 \cdot nTi(OR_1)_4$ entspricht, wobei:
X ein Halogen ist;
R ein $C_1-C_{12}$ Kohlenwasserstoffradikal, eventuell durch Halogen substituiert, ist;
n eine ganze Zahl wenigstens gleich 2 ist.
6. Verfahren nach Anspruch 1, dadurch gekennzeichnet, dass das Lösemittel der Magnesiumverbindung aus einer flüssigen Titanverbindung gebildet ist der allgemeinen Formel (IV)
$Ti(OR_1)_{4-n}X_n$ wobei:
$R_1$ ein $C_1-C_{12}$ Kohlenwasserstoffradikal, eventuell durch Halogen substituiert, ist;
X ein Halogen ist;
n eine ganze Zahl von 0 bis 3 ist.
7. Verfahren nach Anspruch 5, dadurch gekennzeichnet, dass die Mg-Verbindung ein Magnesiumhalogenid ist.

## Revendications

1. Procédé de polymérisation catalytique d'alpha-oléfines de formule:
$R-CH=CH_2$
dans laquelle:
R est un radical alkyle en $C_1-C_6$, ou de leurs mélanges avec de petites quantités d'éthylène, caractérisé en ce qu'il est mis en œuvre en présence de catalyseurs consistant en:
(A) un composé solide, obtenu en faisant réagir:
(a) une émulsion dans un perfluoropolyéther de composés de magnésium et/ou d'un métal de transition liquide à l'état émulsifié, ou de solutions de composés de magnésium et/ou de composés d'un métal de transition dans des solvants non-miscibles dans le perfluoropolyéther, éventuellement en présence de donneurs d'électrons, avec
(b) un agent réducteur et/ou halogénant susceptible de précipiter de tels composés sous forme d'un produit solide dont la molécule contient au moins une liaison Mg-halogène et/ou une liaison métal de transition-halogène, dans le cas où des composés de Mg et/ou d'un métal de transition sont présents dans l'émulsion;

(B) un composé d'alkylaluminium;

(C) un composé donneur d'électrons.

2. Procédé selon la revendication 1, caractérisé en ce que le composé de magnésium est à l'état de solution dans un composé de titane sous forme liquide.

3. Procédé selon la revendication 1, caractérisé en ce que le composé de Mg présente la formule générale:

(I) $Mg(OR_1)_{2-n}X_n$

dans laquelle:

$R_1$ = un radical hydrocarboné en $C_1$–$C_{12}$ éventuellement halogéné,

X = un halogène;

n = un nombre entier de 0 à 2.

4. Procédé selon la revendication 1, dans lequel le composé de Mg présente la formule générale:

(II) $Mg(OR_1)_{m-n}(R_2)_n$

dans laquelle:

$R_1$ = un radical hydrocarboné en $C_1$–$C_{12}$ éventuellement halogéné;

$R_2$ = un radical hydrocarboné en $C_1$–$C_{12}$, identique à ou différent de $R_1$;

m et n sont des nombres entiers de 0 à 2.

5. Procédé selon la revendication 1, caractérisé en ce que le composé de Mg présente la formule générale:

(III) $MgX_2 \cdot nTi(OR_1)_4$

dans laquelle:

X est un halogène;

R = un radical hydrocarboné en $C_1$–$C_{12}$ éventuellement halogéné;

n = un nombre entier supérieure ou égal à 2.

6. Procédé selon la revendication 1, caractérisé en ce que le solvant du composé de magnésium est formé d'un composé de titane liquide de formule générale:

(IV) $Ti(OR_1)_{4-n}X_n$

dans laquelle:

$R_1$ = un radical hydrocarboné en $C_1$–$C_{12}$ éventuellement halogéné;

X = un halogène;

n = un nombre entier de 0 à 3.

7. Procédé selon la revendication 5, caractérisé en ce que le composé de Mg est un halogénure de magnésium.